# EUROPÄISCHE PATENTSCHRIFT

(11) **EP 2 278 194 B1**
(45) Veröffentlichungstag und Bekanntmachung des Hinweises auf die Patenterteilung: **02.11.2011**
(21) Anmeldenummer: 10167175.8
(22) Anmeldetag: 24.06.2010
(51) Int. Cl.: F16H 63/32

(54) **Schaltvorrichtung**
Switching device
Dispositif de commutation

(30) Priorität: 23.07.2009 DE 102009034336
(43) Veröffentlichungstag der Anmeldung: 26.01.2011
(73) Patentinhaber: Schaeffler Technologies GmbH & Co. KG, 91074 Herzogenaurach (DE)
(72) Erfinder: Maier, Waldemar, 91074, Herzogenaurach (DE)

(56) Entgegenhaltungen:
- EP-A1- 1 072 823
- EP-A2- 1 225 375
- DE-A1- 19 528 460
- DE-A1-102007 011 281

## Beschreibung

### Gebiet der Erfindung

Die Erfindung betrifft Schaltvorrichtung gemäß dem Oberbegriff des Anspruchs 1.

### Hintergrund der Erfindung

Eine derartige Schaltvorrichtung ist in DE 195 28 460 A1 näher beschrieben. Die Schaltvorrichtung weist als Verstellführung eine Schaltwalze auf, mit der Schaltgabeln beaufschlagt sind. Die Schaltwalze ist trommelförmig ausgebildet und um die Rotationsachse der Trommel drehbar. Die Führungsschienen sind in diesem Fall als Führungsrippen bezeichnet und werden radial von außen von Stellgabeln übergriffen, d.h. zumindest der Rand der Führungsschiene verläuft zwischen den Zinken durch das Gabelmaul. Alternativ sind als Verstellführungen Scheiben eingesetzt, die zur Rotationsachse konzentrisch sind und deren Randzonen die Führungsschienen bilden.

Die Stellgabeln nach DE 195 28 460 A1 sind durch zwei zueinander beabstandete Stifte gebildet, die aus der Einrichtung zur Weiterleitung von Verstellbewegungen hervorstehen. Die Stellgabeln sind axial in die gleichen Richtungen wie die Rotationsachse längsbeweglich aber quer in Ebenen quer zur Rotationsachse unbeweglich. Die Einrichtung leitet in diesem Fall lineare Verstellbewegungen weiter und ist an dem Beispiel nach DE 195 28 460 A1 eine axial verschiebbare Schaltgabel.

Die linearen Verstellbewegungen werden nach der Beschreibung von DE 195 28 460 A1 durch Verschwenken oder Drehen der Schaltwalze dann erzeugt, wenn von mindestens einer Radialebene axial abweichende kurvenförmig verlaufenden Bereiche der Führungsschienen auf die Stellgabeln treffen. Diese Radialebene ist eine Bezugsebene für die Lage und den Verlauf der Führungsschiene und senkrecht von der Rotationsachse durchstoßen.

Die Einrichtung zur Weitergabe von Verschiebekräften ist nach DE 195 28 460 A1 eine Schaltgabel, mit der die Verschiebekräfte an eine Schiebemuffe der Synchronkupplung weitergegeben werden. Die mit der Schaltgabel verbundene Stellgabel ist mit der Schaltgabel jeweils axiale Richtung längsbeweglich.

Wenn die Schaltwalze geschwenkt oder gedreht wird, durchlaufen alle flachen auf der Radialebene ausgerichteten Bereiche der Führungsschiene die Stellgabel, ohne Längskräfte an den Zinken zu erzeugen. Die Stellgabel verbleibt dabei quer zur Axialrichtung und in Längsrichtung unbeweglich. Die Stellgabeln werden erst dann längs mit der Rotationsachse gleichgerichtet ausgelenkt, wenn ein kurvenförmig oder linear in axiale Richtung von der Radialebene weg ausgelenkter Bereich der Führungsschiene auf die Zinken trifft. Die dabei entstehenden längs- das heißt axial gerichteten Kräfte werden in Längsbewegungen der Stellgabel transformiert. Die Längsbewegungen der Stellgabel führen zu längs gerichteten Kräften an der Schaltgabel und werden beispielsweise als Einrück- oder Ausrückbewegungen an eine Synchronkupplung weitergegeben.

Die zinkenförmig angeordneten Stifte der Stellgabel sind an der Schaltgabel so mit Abstand zueinander angeordnet, dass die Führungsschiene zwischen diese eintauchen kann und außerdem so, dass diese bei Betrieb der Schaltwalze an den Flanken der Führungsschiene entlang gleiten können. Der Abstand der Stifte zueinander ist allgemein durch die größte Steigung des von der Radialebene abweichenden Verlaufs, durch den Radius der am Umkehrpunkt stärkster Krümmungen der Führungsschiene und durch die Gestaltung der Zinken bestimmt. Der an diesen Stellen benötigte Abstand ist größer als es der Abstand wäre, wenn die Gabel nur eine an einer Radialebene gerade ausgerichtete Schiene abfahren würde. Dadurch ist das Spiel in der Gabel zwischen den Stiften und der Führungsschiene insbesondere an den Bereichen der gerade ausgerichtete Führungsschiene besonders groß.

Deshalb wird in DE 195 28 460 A1 vorgeschlagen, die Schaltgabel selbst schwenkbar anzuordnen, so dass die mit der Schaltgabel verbundenen Stifte durch leichtes Verschwenken den Änderungen des kurvenförmigen Verlaufs der Führungsschiene folgen können, so dass der Abstand der Stifte zueinander verringert werden kann.

### Beschreibung der Erfindung

Die Aufgabe der Erfindung ist es eine Schaltvorrichtung zu schaffen, die sehr genau ausgeführt ist und die sich trotz hoher Genauigkeit ihrer Ausführung einfach und kostengünstig herstellen lässt.

Diese Aufgabe ist mit dem Gegenstand des Anspruchs 1 gelöst.

Die Erfindung sieht eine Schaltvorrichtung mit wenigstens einer Verstellführung und mit zumindest einer Einrichtung zur Weitergabe von linearen Verstellbewegungen vor.

Verstellführungen sind rotierbare bzw. schwenkbare scheiben-, trommel- oder walzenartig ausgebildete und zumeist um ihre Schwenk- oder Rotationsachse im wesentlich rotationssymmetrische Bauteile oder Baugruppen. Diese Verstellführungen oder wenigstens deren Führungsschienen sind zumindest in der Wirkverbindung mit der Stellgabel axial unbeweglich gelagert. Die Verstellführungen bestehen so beispielsweise aus wenigstens einer Kurvenscheibe (Steuerscheibe) mit einer Führungsschiene oder aus einer Schaltwalze mit einem walzenförmigen Grundkörper mit wenigstens einer, bevorzugt jedoch mit mehreren Führungsschienen , die aus der Oberfläche des walzenförmigen Grundkörpers hervorstehen oder die auf diesem befestigt sind.

Die Führungsschienen können axial beliebig breit und radial beliebig hoch ausgebildet sein. Die jeweilige Führungsschiene ist wahlweise einteilig mit einer Scheibe oder mit einem Walzengrundkörper ausgebildet oder an diesen befestigt. Eine zum Verlauf der Rotationsachse parallel längs-, also axial bewegliche Stellgabel, die mit der Einrichtung zumindest wirkverbunden oder an dieser befestigt ist, übergreift die Führungsschiene mit wenigstens zwei Zinken. Die Führungsschiene ist zwischen den Zinken schwenkbeweglich zur Stellgabel.

Die jeweilige Führungsschiene kann dadurch solange um die Rotationsachse geschwenkt werden ohne die Stellgabel zu beaufschlagen, solange der von der Stellgabel übergriffene Bereich der Führungsschiene auf einer Radialebene ausgerichtet ist. Wenn der von der Radialebene abweichende z.B. kurvenförmige Bereich der Führungsschiene auf die Zinken oder auf nur einen Zinken der jeweiligen Stellgabel trifft, werden an der Führungsschiene und an der Stellgabel axial gerichtete Kraftkomponenten erzeugt.

Die Einrichtung zur Weitergabe von Verstellbewegungen ist über wenigstens eine Stellgabel mit der Verstellführung wirkverbunden. Dabei kann die Einrichtung die Verstellführung antreiben. Dazu wird von einem Antrieb über die Einrichtung eine lineare Verstellbewegung an die Stellgabel weitergeleitet. Der Antrieb ist entweder zur Einheit separat oder die Einrichtung weist einen eigenen Antrieb auf. Die Längsbewegung wird in diesem Fall von der Einheit über die Stellgabel an die Verstellführung weitergegeben und dort in Drehbewegungen gewandelt. Dabei werden an dem Kontakt der Stellgabel mit der kurvenförmigen Bahn der Führungsschiene die längs gerichtete Kräfte in tangentiale Komponenten zerlegt. Die tangentialen Komponenten erzeugen an der Verstellführung Drehmomente, durch welche die Verstellführung solange geschwenkt wird, solange die Stellgabel an einem von der Radialebene axial kurvenförmig ausweichenden Bereich der Führungsschiene angreift.

Alternativ dazu wird die Verstellführung angetrieben und rotiert um die Rotationsachse. Dabei resultieren die Drehmomente an dem Kontakt der Stellgabel mit der kurvenförmigen Bahn der Führungsschiene zunächst in tangentialen Kraftkomponenten an der Führungsschiene, die dann im Kontakt mit der Stellgabel auch in längsgerichtete Komponenten zerlegt werden und die Stellgabel längs verschieben.

Wie anfangs schon erwähnt, war es vor dem Zustandekommen dieser Erfindung bekannt, dass die Stellgabel zusammen mit der Einheit schwenkbar angeordnet ist, um so ein Klemmen an Krümmungen der Führungsschiene zu vermeiden. Wenn jedoch zum Beispiel eine als Schaltgabel ausgebildete Einheit aus der eigentlichen natürlichen Lage derartig verschwenkt wird, führt dies zu ungenauen Eingriffen der Schaltgabel in der Führungsnut einer Schiebemuffe und dort zu vorzeitigem Verschleiß an der Schaltgabel bzw. der Schiebemuffe. Außerdem werden Rückstellkräfte erzeugt, mit denen die Schaltgabel in die natürliche Lage zurück geführt werden soll. Diese Rückstellkräfte können auch zu unerwünschten Rückstellmomenten an der Verstellführung führen. Diese Rückstellmomente fördern unter Umständen vorzeitigen Verschleiß bzw. erfordern höhere Antriebsleistungen und erzeugen ggf. unstete Drehmomentverläufe.

Die Erfindung sieht vor, dass die Stellgabel um eine Schwenkachse schwenkbeweglich angeordnet ist. Die Schwenkachse ist quer zur axialen Richtung, d.h. quer zu der Richtung ausgerichtet, in welche die Stellgabel längs verschiebbar angeordnet ist. Dabei ist die Stellgabel relativ zu der Einrichtung um die Schwenkachse schwenkbeweglich gelagert. Ausgleicfisbewegungen der Stellgabel sind werden somit nicht auf die Einrichtung zur Weitergabe von Verstellbewegungen übertragen. Antriebselemente, die Verstelleinheit selbst und Schaltgabeln, Führungsbuchsen usw. sind frei von Rückstellkräften und dadurch hervorgerufenen vorzeitigen Verschleiß.

Eine Ausgestaltung der Erfindung sieht vor, dass die Schwenkgabel mittels eines Bolzens an der Einrichtung abgestützt ist. Die zylindrische Gestalt eines Bolzens ermöglicht es, die Schwenkachse auf die Symmetrieachse des Bolzens zu legen, so dass die Stellgabel auf dem Bolzen schwenkbar gelagert ist. Alternativ ist die Stellgabel auf dem Bolzen fest aber der Bolzen ist schwenkbar an der Einrichtung gelagert. Denkbar ist auch, dass der jeweils der Bolzen und die Stellgabel schwenkbar gelagert sind. Der Bolzen ist zumindest partiell oder alternativ durchgängig zylindrisch bzw. weist partiell oder durchgängig andere Querschnitte auf. Außerdem ist der Bolzen durchgängig oder partiell innen hohl und innen oder außen schwenkbar aufgenommen.

Der Bolzen ist entweder mit einer einfachen zylindrischen Steckverbindung oder mittels eines oder mehrerer Gleit- bzw. Wälzlager schwenkbar gelagert. Als Wälzlager sind zum Beispiel Nadellager oder Kugellager vorgesehen.

Eine weitere Ausgestaltung der Erfindung sieht vor, dass die gedachte Verlängerung der Schwenkachse die Rotationsachse vorzugsweise senkrecht schneidet. Dadurch ist die Gabel ein Durchgangsschlitz oder eine Nut mit parallelen Flanken für den Durchlauf der Führungsschiene. Denkbar sind aber auch alle anderen zur Rotationsachse geneigten aber die Rotationsachse nicht schneidenden Ausrichtungen der Schwenkachse.

Eine einfache und doch wirksame Anordnung sieht vor, dass die Richtungsachsen der Zinken parallel zueinander ausgerichtet verlaufen und auf einer gedachten Kreisbahn um die Schwenkachse schwenkbeweglich sind. Damit kann die Stellgabel Krümmungen der Führungsschiene abfahren ohne zu verklemmen. Der Abstand zwischen den Zinken kann an den kleinsten Abstand angepasst werden, der dann erforderlich ist, wenn die mit der Umfangskreisbahn ausgerichteten Abschnitte der Führungsschiene die Stellgabel passieren. Die Spiele im Gabelmaul zwischen den Zinken und der Führungsschiene können sehr gering gehalten werden, so dass die Schaltvorrichtung präzise arbeitet.

### Beschreibung der Zeichnungen

In der nachfolgenden Beschreibung haben, auch bei unterschiedlichen Darstellungen, gleichen Bezugszeichen die gleiche Bedeutung.

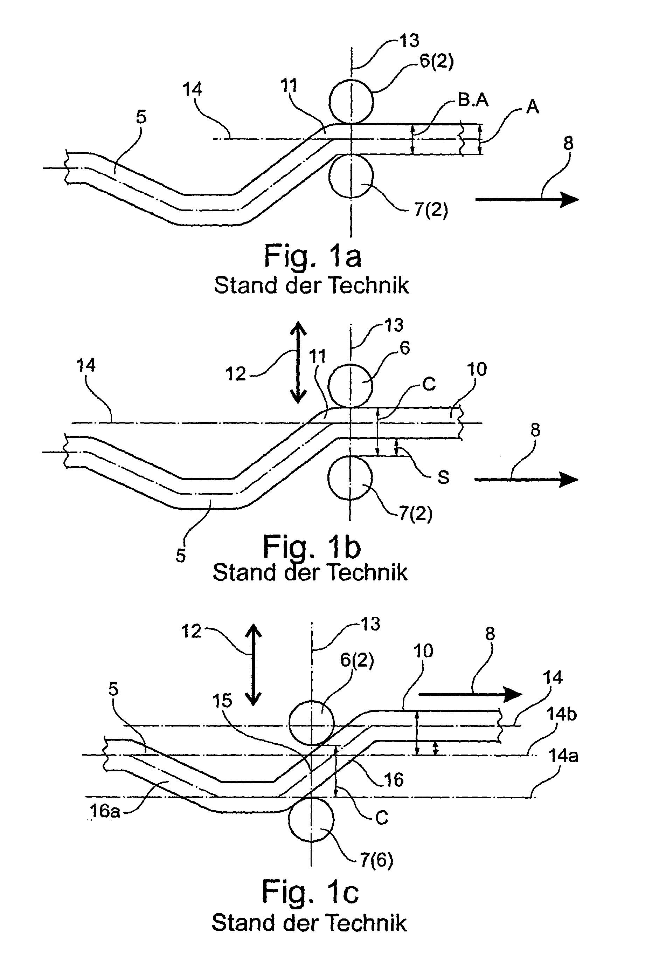

Figuren 1a - 1c - Die Figuren 1 a bis 1c zeigen schematisch eine in der Bildebene abgewickelte Führungsschiene 5 einer nicht weiter dargestellten Verstellführung und den Übergriff einer Stellgabel 2, von der in der Ansicht nur die Zinken 6 und 7 dargestellt sind, über die Führungsschiene 5 nach dem bekannten Stand der Technik. Die Führungsschiene 5 verläuft mit dem Abschnitt 10 zwischen den Zinken 6 und 7 in die mit dem Richtungspfeil 8 markierte Richtung, die in der Abwicklung in einer senkrecht von der Längsachse 13 durchstoßenen Radialebene 14 liegt.

Die mit dem Doppel-Richtungspfeil 12 markierte Richtung ist die Axialrichtung, also die Längsrichtung, in die auch die Rotationsachse der Verstellführung gerichtet ist. Die im Bild senkrechte Linie markiert eine Längsachse 13 einer nicht dargestellten Schaltschiene. Die Längssachse 13 ist demnach axial ausgerichtet. Die Stellgabel 2 ist in die mit dem Richtungspfeil 8 markierte Richtung unbeweglich, jedoch in den Positionen nach den Figuren 1b und 1c in die mit dem Doppel-Richtungspfeil 12 markierte axialen Richtungen längs beweglich.

Die Zinken 6 und 7 liegen sich fix auf einer Geraden gegenüber, die in der Darstellung senkrecht oberhalb oder senkrecht unterhalb sowie parallel zur Längsachse 13 ausgerichtet verläuft. Die Zinken 6 und 7 sind jedoch in den Positionen mit unveränderlichem Abstand A oder C zueinander als Gabel 2 gemeinsam axial beweglich.

Figur 1a zeigt die Anordnung in Ruhestellung. Die stiftartigen Zinken 6 und 7 der Stellgabel 2 sind an einer beliebigen nicht dargestellten Einrichtung zur Weitergabe von Verstellbewegungen so mit Abstand A zueinander angeordnet, dass die Führungsschiene 5 zwischen diese eintauchen kann. Der Abstand A entspricht im wesentlichen der axial gerichteten Breite B der Führungsschiene 5. In dem Fall, dass die Verstellführung in die Umfangsrichtung im Uhrzeigersinn gedreht werden sollte, würde die Stellgabel 2 an dem Knick 11 klemmen, da der axiale Abstand A nicht groß genug ist.

Figuren 1b und 1c - In dem mit den Figuren 1b und 1c dargestellten Betriebszustand wird die Verstellführung im Uhrzeigersinn um eine Rotationsachse geschwenkt, was dazu führt, dass die Führungsschiene 5 mit der Verstellführung um die Rotationsachse umläuft. Da die Führungsschiene 5 als Abwinklung dargestellt ist, wird diese relativ zur Stellgabel 2 jedoch in Richtung des Richtungspfeils 8 aus der Position der Darstellung in Figur 1b nach rechts in die Position nach Figur 1c verschoben dargestellt.

Figur 1c - Die Führungsschiene 5 verläuft von rechts nach links betrachtet zunächst mit dem Abschnitt 10 an einer beliebigen Radialebene 14b ausgerichtet, die in der Führungsschiene 5 axial mittig als neutrale Linie verläuft. Der Verlauf der Führungsschiene 5 weicht jedoch von dem Knick 11 an von der Radialebene 14 ab und ist mit dem Abschnitt 16 entlang einer Geraden 15 ausgerichtet und verläuft in Richtung der parallelen Radialebene 14a. Weiter verläuft die Führungsschiene an dem Abschnitt 10a an der Radialebene 14a ausgerichtet und ist dann an dem Abschnitt 16a zurück in Richtung der Radialebene 14 ausgelenkt.

Der Abstand B der Zinken 6 und 7 zueinander ist allgemein durch die Steigung der Geraden 15 bestimmt. Würde der Abschnitt 16 gekrümmt verlaufen, wäre der Abstand B durch die Steigung der Kurventangente an steilster Stelle der Krümmung bestimmt sein.

In der Darstellung nach Figur 1c stehen sich die Zinken 6 und 7 an dem Abschnitt 16 der Verstellschiene 5 gegenüber. Die Zinken 6 und 7 wurden durch Schwenken der Verstellführung im Uhrzeigersinn in diese Position gebracht, in dem der Zinken 7 durch die Flanken des Abschnitts 16 axial verschoben wurde. Dabei hat die Stellgabel 2 den axialen Abstand zwischen der Ebene 14 und der Ebene 14b überwunden. Der Abstand C, der in der nach Figur 1c beschriebenen Position zwischen den Zinken 6 und 7 an dem Abschnitt 16 benötigt wird, ist größer als der Abstand A an dem Abschnitt 10 nach Figur 1a und abhängig von der Steigung der Geraden 15 über der beliebigen Ebene 14a.

Figur 1b Der Abstand C zwischen den Zinken 6 und 7 wirkt sich in an einem Abschnitt 10, der parallel zu Radialebenen ausgerichtet ist, in dem Spiel S aus. Das Spiel zwischen den Zinken 6 und 7 und der Führungsschiene 5 ist demnach in der mit Figur 1b dargestellten Position der Führungsschiene 5 in der Stellgabel 2 besonders groß. Das Spiel S wirkt sich insbesondere bei Wechsel der Drehrichtung der Verstellführung bzw. bei Richtungswechsel Längsbewegung der Stellgabel 2 nachteilig auf die Präzision der Schaltvorgänge aus, da zunächst das Spiel überwunden werden muss.

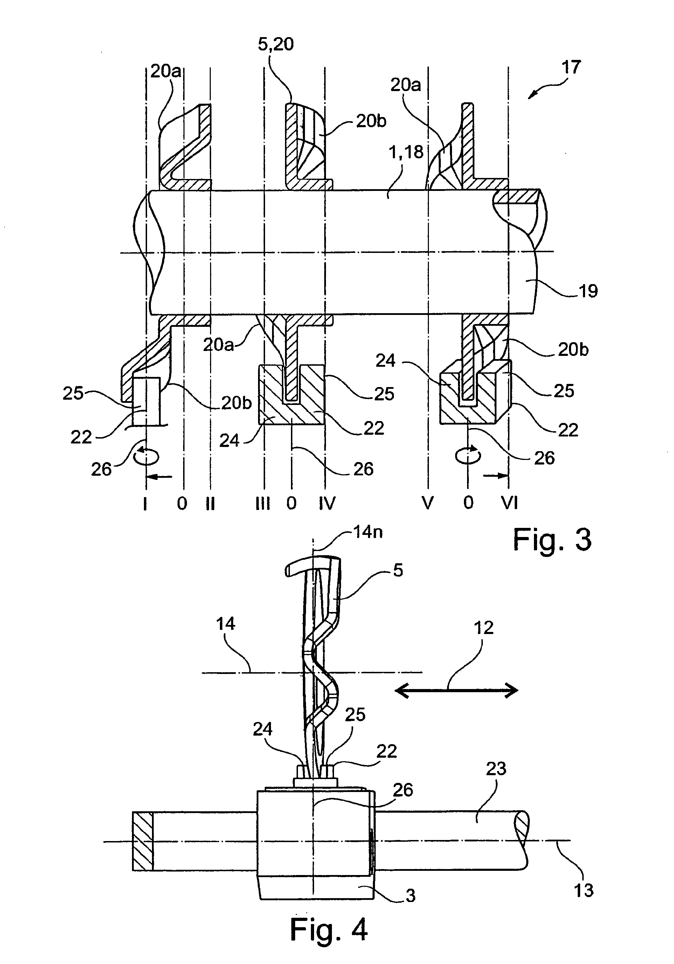

Figur 3 und Figuren 10 und 11 - Figur 3 zeigt eine Baugruppe einer Schaltvorrichtung 17 mit einer Verstellführung 1 in Form einer Schaltwalze 18. Die Schaltwalze 18 weist einen außenzylindrischen walzenförmigen Grundkörper 19 auf, der wahlweise nach der Darstellung rechts im Bild innen hohl und nach der Darstellung links im Bild aus Vollmaterial gebildet sein kann. Auf der Schaltwalze 18 sind Führungsschienen 5 in Form von Stellscheiben 20 angeordnet. Die Stellscheiben 20 sind Gleichteile. Jede der Stellscheiben 20 ist so auf dem Grundkörper 19 angeordnet, dass die Verstellbereiche 20a und 20b einer Stellscheibe 20 gegenüber der anderen Stellscheibe 20 am Umfang betrachtet eine andere Position innehaben.

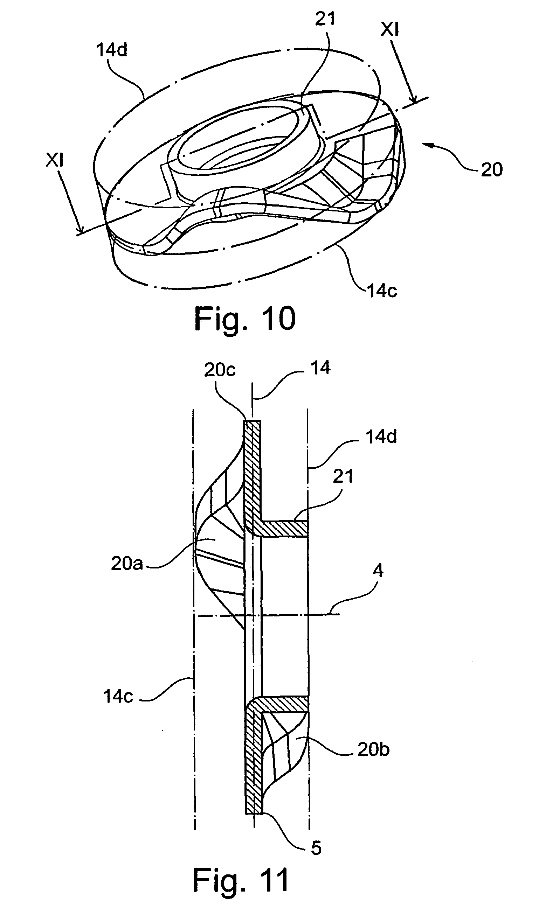

Die Stellscheiben 20 sind in Figur 10 als Einzelteil dargestellt. Figur 11 zeigt eine Stellscheibe 20 in einem Längsschnitt entlang der Linie XI - XI nach Figur 10, der in der Ansicht nach Figur 11 jedoch gedreht ist. Eine Radialebene 14 verläuft in der Führungsschiene 5 axial mittig auf der neutralen Linie des Abschnitts 20c senkrecht von der Rotationsachse 4 durchstoßen. Die Stellscheibe 20 weist zwei Verstellbereiche 20a und 20b auf, an denen der Verlauf der Führungsschiene 5 in Form von kurvenähnlichen Krümmungen axial in Richtung der Radialebene 14c oder !4d abweicht. Am Umkehrpunkt der Krümmung kehrt sich der jeweilige Verlauf in Richtung der Radialebene 14 zurück um. Die Verstellbereiche 20a und 20b sind ursprünglich aus einer Kreisringscheibe jeweils axial in eine andere axiale Richtung ausgeformt, von der noch der ebene Abschnitt 20c verblieben ist.

Die Stellscheiben 20 weisen einen Bund 21 auf, der hohlzylindrisch ausgebildet ist, und mit dem die jeweilige Stellscheibe auf dem Grundkörper 19 der Schaltwalze 18 befestigt ist.

Figuren 3 und 4 - Die Schaltvorrichtung 17 ist mit drei identischen Stellgabeln 22 versehen. Jede der Stellgabeln 22 ist an einer Einrichtung 3 zur Weitergabe von Verstellbewegungen gehalten, die ein Antrieb oder eine Schaltgabel oder eine Führungshülse auf der Schaltschiene 23 sein kann. Jede der Stellgabeln 22 weist zwei Zinken 24 und 25 auf, die identisch zueinander ausgebildet sind. Die jeweilige Stellgabel 22 übergreift einen Rand der jeweiligen Führungsschiene 5. In Figur 3 sind die Stellgabeln 22 zunächst ohne Verbindung zur Einrichtung 3 gezeigt. In Figur 4 ist die Verbindung zwischen einer Stellgabel 22 mit der Einrichtung 3 dargestellt. Jeder Stellgabel 22 ist eine dieser Einheiten zugeordnet, die auf einer oder unterschiedlichen Schaltschienen 23 sitzen können. Außerdem aus Figur 4 ersichtlich, dass die Einrichtung 3 auf der Schaltschiene 23 in die mit dem Doppel-Richtungspfeil 12 markierten Richtungen verschiebbar ist, weil die Längsachse 13 der Schaltschiene 23 parallel zur Rotationsachse 4 ausgerichtet ist.

Verschiebungen der jeweiligen Einrichtung 3 werden an die Stellgabeln 22 weitergeben und führen zum Wechsel der jeweiligen Positionen der Stellgabel 22 innerhalb der Bereiche I - 0 - II; III - 0 - IV; oder V - 0 - VI, denen die jeweilige Einrichtung 3 und Stellgabel 22 zugeordnet ist und damit zum Antrieb der Schaltwalze 18. Alternativ führt der Antrieb der Schaltwalze 18 zum Wechsel der jeweiligen Positionen der Stellgabel 22 innerhalb der Bereiche I - 0 - II; III - 0 - IV; oder V - 0 - VI und zur Weitergabe der axial gerichteten Verstellbewegung über die Stellgaben 22 an die Einrichtungen 3, die ihrerseits beispielsweise eine Schaltgabel oder einen Schaltfinger antreiben.

Die Stellgabel 22 ist gegenüber der Einrichtung 3 um die Schwenkachse 25 schwenkbar gelagert. Die Schwenkachse 26 ist je nach axialer Position in einer beliebigen Radialebene 14n ausgerichtet und schneidet bevorzugt die Rotationsachse 4 und die Längsachse 13 senkrecht.

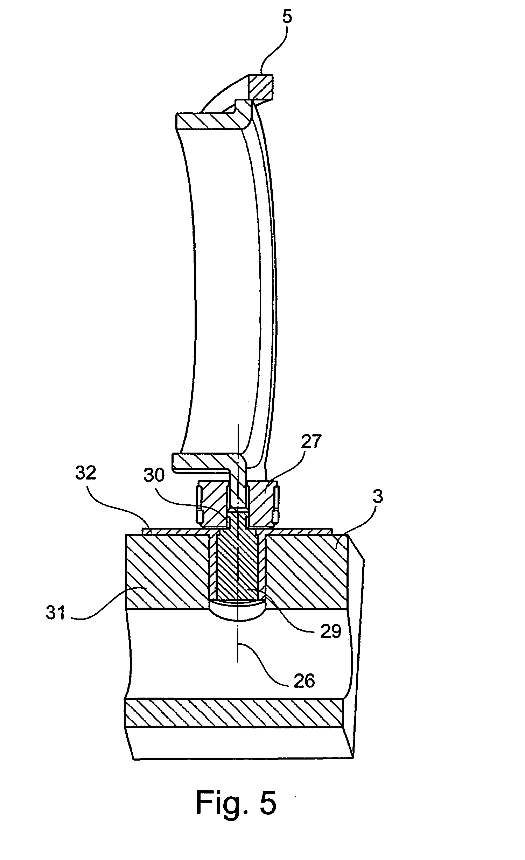

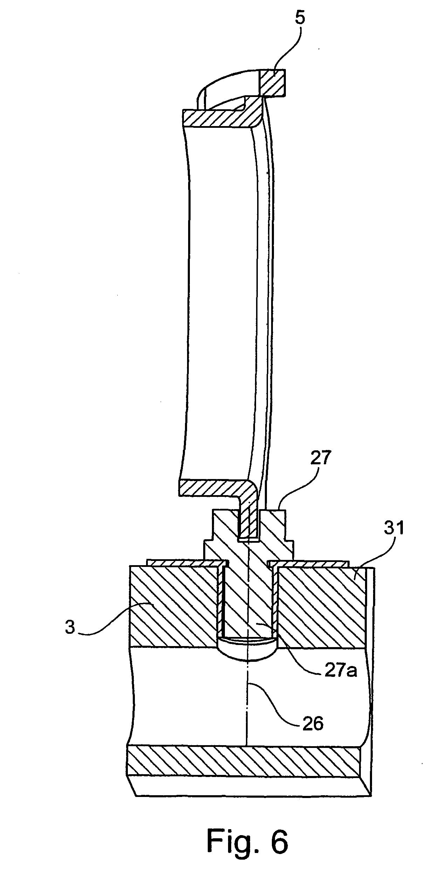

Figuren 5 und 6 - Die Figuren 5 und 6 zeigen alternative Lagerungen von Stellgabeln 27 und 28 an der Einrichtung 3. In Figur 5 ist eine Stellgabel 27 gezeigt, die einteilig mit einem Schaft 27a ausgebildet ist. Der Bolzen 27a ist mittels eines Gleitlagers 32 um die Schwenkachse schwenkbar in dem einem Gehäuse 31 der Einrichtung 3 um die Schwenkachse 26 schwenkbar gelagert. In der Darstellung nach Figur 6 ist eine Stellgabel 28 gezeigt, die mittels eines Gleitlagers 30 um die Schwenkachse 26 schwenkbar auf einem Bolzen 29 gelagert ist. Der Bolzen 29 ist entweder fest in einem Gehäuse 31 der Einrichtung 3 aufgenommen, oder ist mittels eines Gleitlagers 32 um die Schwenkachse 26 schwenkbar gelagert.

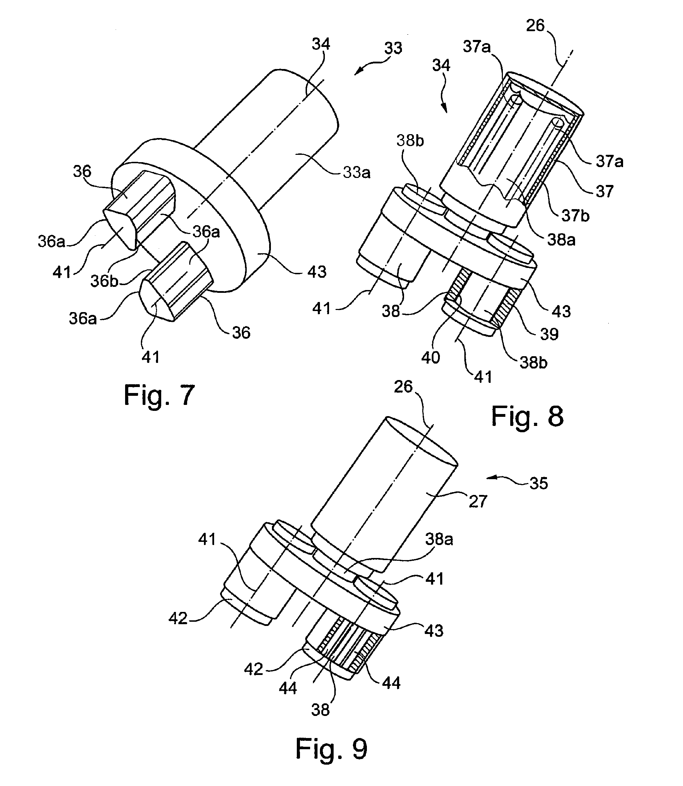

Figuren 7, 8 und 9 - Die Figuren 7, 8 und 9 zeigen verschiedene Ausführungen von Stellgabeln 33, 34 und 35 in Hauptansichten und teilweise geschnitten.

Figur 7 - Die Stellgabel 33 nach Figur 7 ist einteilig aus Zinken 36, einer kreischeibenförmigen Plattform 43 und aus einem Schaft 33a gebildet. Die Zinken 36 sind zumindest da, wo die Führungsschiene 5 zwischen den Zinken 36 verlaufen soll, im dachförmig mit zwei aufeinander zu verlaufende Dachflächen 36a ausgebildet. Die Dachflächen 36a verlaufen zueinander geneigt. Dabei ist jeweils eine Dachfläche 36a an einem der Zinken 36 einer Dachfläche 36a an dem anderen Zinken 36 schräg zugewandt. Die Dachflächen 36a treffen an einer verrundeten Firstkante 36b aufeinander, wobei die jeweilige Firstkante 36b des jeweiligen Zinkens 36 der Firstkante 36b des gegenüberliegenden Zinkens 36 gegenüber liegt.

Figur 8 - Figur 8 zeigt eine Stellgabel 34, die mit einem Wälzlager 37 in Form einer Nadelbüchse vormontiert ist. Das Wälzlager 37 weist gleichmäßig am Umfang des Schafts 38a verteilte Wälzkörper 37a in Form von Nadeln und eine Nadelbüchse 37b auf, die das Ganze umfasst. Das Wälzlager 37 ist zur schwenkbaren Lagerung der Stellgabel 34 in einer Einrichtung 3 vorgesehen. Die Zinken 38 an einer kreisscheibenförmigen Plattform 43 sind jeweils durch einen Bolzen 38b und durch eine Rolle 39 gebildet. Die Rolle 39 ist mittels eines Gleitlagers 40 auf dem jeweiligen Zinken 38 um die Achsen 41 drehbar gelagert, so dass die Reibung im Kontakt zwischen einer Führungsschiene 5 und der Stellgabel 34 gemindert wird.

Figur 9 - Figur 9 zeigt eine Stellgabel 35, deren Aufbau mit dem der Stellgabel 34 im Wesentlichen übereinstimmt. Der Unterschied zwischen den Stellgabeln 34 und 35 ist das Nadellager 42 mit Nadeln 44 gegeben, mit dem die Rolle 39 auf dem jeweiligen Zinken 38 um die Achse 41 schwenkbar gelagert ist. Die Achsen 41 sind parallel zur Schwenkachse 26 ausgerichtet, wobei die Schwenkachse 26 zwischen den Achsen 41 angeordnet ist.

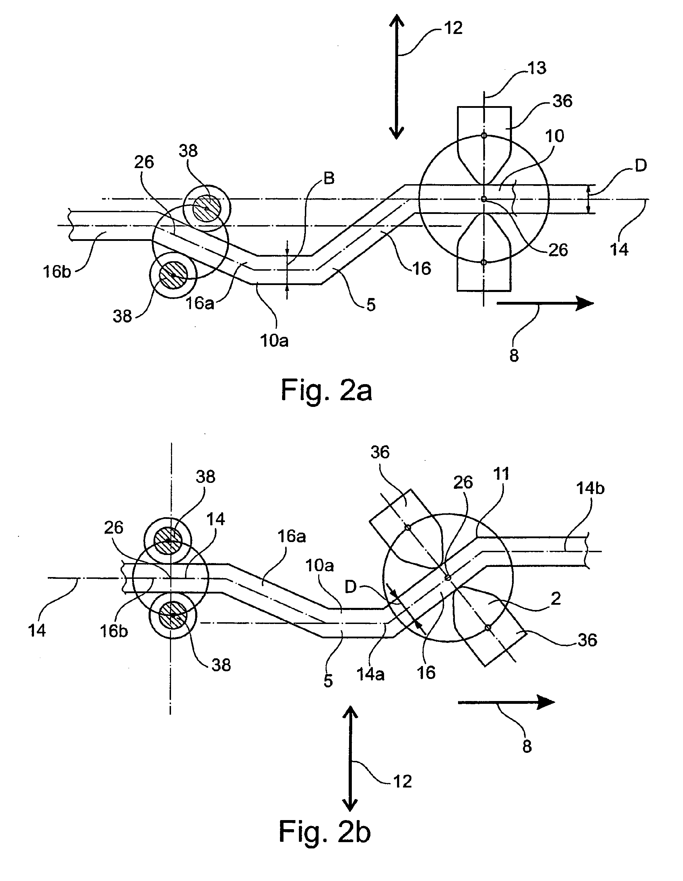

Figuren 2a und 2b Die Figuren 2a - 2b zeigen schematisch eine in der Bildebene abgewickelte Führungsschiene 5 einer nicht weiter dargestellten Verstellführung und den Übergriff verschiedener Stellgabeln 2, von der in der Ansicht nur die Zinken 36b oder 38 dargestellt sind. Die Führungsschiene 5 verläuft nach der Darstellung in Figur 2a mit dem Abschnitt 10 zwischen den Zinken 36b und mit dem Abschnitt 16a zwischen den Zinken 38b in die mit dem Richtungspfeil 8 markierte Richtung, die in der Abwicklung in einer senkrecht von der Längsachse 13 bzw. 13a durchstoßenen Radialebene 14 liegt.

Die mit dem Doppel-Richtungspfeil 12 markierte Richtung ist die Axialrichtung, also die Längsrichtung, in die auch die Rotationsachse der Verstellführung gerichtet ist. Die im Bild senkrechte Linie markiert eine Längsachse 13 bzw. 13a einer nicht dargestellten Schaltschiene. Die Längssachse 13 ist demnach axial ausgerichtet. Die Stellgabel 2 ist in die mit dem Richtungspfeil 8 markierte Richtung unbeweglich, jedoch in die mit dem Doppel-Richtungspfeil 12 markierte axialen Richtungen längs beweglich.

Die Zinken 36 und 38 liegen sich fix mit unveränderlichem Abstand D auf einer Geraden gegenüber, die in der Darstellung senkrecht oberhalb oder senkrecht unterhalb sowie parallel zur Längsachse 13 ausgerichtet verläuft. Der Abstand D entspricht im Wesentlichen der Breite B der Führungsschiene 5 zuzüglich eines geringen Bewegungsspiels, dass gegen Null gehen kann.

Die Zinken 36 bzw. 38 sind jeweils mit den parallel zur senkrecht ins Bild hineingehenden Hauptachsen 41 auf einer Kreisbahn 44 um die jeweilige Schwenkachse 26 schwenkbar.

In dem mit den Figur 2b dargestellten Betriebszustand wird die Verstellführung im Uhrzeigersinn um eine Rotationsachse geschwenkt, was dazu führt, dass die Führungsschiene 5 mit der Verstellführung um die Rotationsachse umläuft. Da die Führungsschiene 5 als Abwicklung dargestellt ist, wird diese relativ zur Stellgabel 2 jedoch in Richtung des Richtungspfeils 8 aus der Position der Darstellung in Figur 2a nach rechts in die Position nach Figur 2b verschoben dargestellt. Die Führungsschiene 5 verläuft von rechts nach links betrachtet zunächst mit dem Abschnitt 10 an einer beliebigen Radialebene 14b ausgerichtet, die in der Führungsschiene 5 axial mittig als neutrale Linie verläuft. Der Verlauf der Führungsschiene 5 weicht jedoch von dem Knick 11 an von der Radialebene 14 ab und ist mit dem Abschnitt 16 entlang einer Geraden 15 ausgerichtet und verläuft in Richtung der parallelen Radialebene 14a. Weiter verläuft die Führungsschiene an dem Abschnitt 10a an der Radialebene 14a ausgerichtet und ist dann an dem Abschnitt 16a zurück in Richtung der Radialebene 14 ausgelenkt.

Der Abstand D zwischen den Zinken ist nicht mehr durch die Steigung an den Abschnitten 16 bzw. 16a bestimmt, da die Zinken 36 bzw. 38 mit ihren Hauptachsen auf der Kreisbahn 44 schwenkbar sind und sich so dem Verlauf der Führungsschiene anpassen.

### Bezugszeichen

- 1: Verstellführung
- 2: Stellgabel
- 3: Einrichtung zur Weitergabe von Verstellbewegungen
- 4: Rotationsachse
- 5: Führungsschiene
- 6: Zinken der Stellgabel 2
- 7: Zinken der Stellgabel 2
- 8: Richtungspfeil, der die Um- fangsrichtung markiert
- 9: Umfangskreislinie
- 10: geradlinig verlaufender Ab- schnitt
- 10a: geradlinig verlaufender Ab- schnitt
- 11: Knick
- 12: Richtungspfeil
- 13: Längsachse
- 13a: Längsachse
- 14: Radialebene
- 14a: Radialebene
- 14b: Radialebene
- 14c: Radialebene
- 14d: Radialebene
- 15: Gerade
- 16: abweichend verlaufender Ab- schnitt
- 18: Schaltwalze
- 19: Grundkörper
- 20: Stellscheibe
- 20a: Verstellbereich
- 20b: Verstellbereich
- 20c: ebener Bereich
- 21: Bund
- 22: Stellgabel
- 23: Schaltschiene
- 24: Zinken der Stellgabel 22
- 25: Zinken der Stellgabel 22
- 26: Schwenkachse
- 27: Stellgabel
- 27a: Schaft der Stellgabel 27
- 28: Stellgabel
- 29: Bolzen
- 33: Stellgabel
- 34: Stellgabel
- 35: Stellgabel
- 36: Zinken der Stellgabel 33
- 36a: Dachfläche des Zinkens 36
- 36b: Firstkante des Zinkens 36
- 16a: abweichend verlaufender Ab- schnitt
- 17: Schaltvorrichtung
- 37: Wälzlager der Stellgabel 34
- 37a: Wälzkörper
- 37: Nadelbüchse
- 38: Zinken der Stellgabel 34
- 38a: Schaft der Stellgabel 34
- 38b: Bolzen
- 39: Rolle
- 40: Gleitlager
- 41: (Haupt)Achse
- 42: Nadellager
- 43: Plattform
- 44: Kreisbahn

## Patentansprüche

1. Schaltvorrichtung mit wenigstens einer Verstellführung (1), mit mindestens einer Stellgabel (2, 22, 27, 33, 34, 35) und mit mindestens einer Einrichtung (3) zur Weitergabe von Verstellbewegungen, wobei die Verstellführung (1) um eine axial ausgerichtete Rotationsachse (4) zumindest schwenkbar angeordnet ist und wenigstens eine in Umfangsrichtung um die Rotationsachse (4) verlaufende Führungsschiene (5) aufweist, und wobei die Verstellführung (1) mittels der Führungsschiene (5) über die Stellgabel (2, 22, 27, 33, 34, 35) mit der Einrichtung (3) zur Weitergabe von Verstellbewegungen wirkverbunden ist, wobei
- der Verlauf der Führungsschiene (5) zumindest einmal von einer Radialebene axial abweicht und dabei zumindest in eine axiale Richtung über der Radialebene ansteigt,
- die Stellgabel (2, 22, 27, 33, 34, 35) parallel zur Rotationsachse (4) axial beweglich ist und die Führungsschiene (5) mit wenigstens zwei Zinken (6, 7, 24, 25, 36, 38) übergreift,
- dass die Stellgabel (2, 22, 27, 33, 34, 35) mit der Einrichtung (3) verbunden ist,
- dass die Führungsschiene (5) in Umgangsrichtung relativ zur Stellgabel (2, 22, 27, 33, 34, 35) beweglich zwischen den Zinken (6, 7, 24, 25, 36, 38) angeordnet ist,
- **dadurch gekennzeichnet, daß** die Zinken (6, 7, 24, 25, 36, 38) der Stellgabel (2, 22, 27, 33, 34, 35) relativ zu der Einrichtung (3) um eine quer zur axialen Richtung ausgerichtete Schwenkachse (26) schwenkbeweglich sind.

2. Schaltvorrichtung nach Anspruch 1, in der die Stellgabel (27) mittels eines Bolzens (29) an der Einrichtung abgestützt ist.

3. Schaltvorrichtung nach Anspruch 2 in der die Stellgabel (27) schwenkbeweglich auf dem Bolzen (29) gelagert ist.

4. Schaltvorrichtung nach Anspruch 2 in der der Bolzen (29)schwenkbeweglich an der Einrichtung (3) gelagert ist.

5. Schaltvorrichtung nach Anspruch 1, 2, 3 oder 4, in der die Stellgabel (34) mit Hilfe wenigstens eines Wälzlagers (37) schwenkbeweglich gelagert ist.

6. Schaltvorrichtung nach Anspruch 1, in der die gedachte Verlängerung der Schwenkachse (26) die Rotationsachse (4) rechtwinklig schneidet.

7. Schaltvorrichtung nach Anspruch 1, in der die Hauptrichtungsachsen der Zinken (41) parallel zueinander ausgerichtet verlaufen und auf einer gedachten gemeinsamen Kreisbahn (44) um die Schwenkachse (26) schwenkbeweglich sind.

8. Schaltvorrichtung nach Anspruch 1 oder 7, in der die Zinken (36) zumindest da, wo die Führungsschiene (5) zwischen den Zinken (36) verläuft, im dachförmig mit zwei aufeinander zu verlaufende Dachflächen (36a) ausgebildet sind, wobei
- die Dachflächen (36a) zueinander geneigt verlaufen und dabei jeweils eine Dachfläche (36a) an einem der Zinken (36) einer Dachfläche (36a) an dem anderen Zinken (36) schräg zugewandt ist,
- die Dachflächen (36a) an einer verrundeten Firstkante (36b) aufeinander treffen,
- die jeweilige Firstkante (36b) des jeweiligen Zinkens (36) der Firstkante (36b) des gegenüberliegenden Zinkens (36) gegenüber liegt.

9. Schaltvorrichtung nach Anspruch1 , in der auf dem jeweiligen Zinken (38) der Stellgabel (35) jeweils eine Rolle (39) drehbar gelagert ist, die die Führungsschiene (5) zwischen sich nehmen, wobei die Drehachse der Rolle (39) der Hauptachse (41) der Zinken (38) entspricht und parallel zur Schwenkachse (26) ausgerichtet verläuft.

10. Schaltvorrichtung nach Anspruch 1, in der die Verstellführung (1) eine Stellscheibe (20) ist, bei der zumindest ein radial äußere Rand die Führungsschiene (5) bildet.

11. Schaltvorrichtung nach Anspruch 1, mit einer Schaltwalze (18), wobei die Verstellführung (1) die Schaltwalze (18) mit mindestens einem Grundkörper (19) und mit wenigstens einer den Grundkörper (19) umfangsseitig radial überragenden Führungsschiene (5) ist.

## Claims

1. Shift device having at least one adjustment guide (1), having at least one actuating fork (2, 22, 27, 33, 34, 35) and having at least one device (3) for transmitting adjustment movements, the adjustment guide (1) being arranged at least so as to be pivotable about an axially aligned axis of rotation (4) and having at least one guide rail (5) running in the circumferential direction around the axis of rotation (4), and the adjustment guide (1) being operatively connected by means of the guide rail (5) and via the actuating fork (2, 22, 27, 33, 34, 35) to the device (3) for transmitting adjustment movements, wherein
- the profile of the guide rail (5) deviates axially from a radial plane at least once, and in so doing, rises above the radial plane at least in one axial direction,
- the actuating fork (2, 22, 27, 33, 34, 35) is axially movable parallel to the axis of rotation (4) and engages with at least two prongs (6, 7, 24, 25, 36, 38) over the guide rail (5),
- the actuating fork (2, 22, 27, 33, 34, 35) is connected to the device (3),
- the guide rail (5) is arranged between the prongs (6, 7, 24, 25, 36, 38) so as to be movable in the circumferential direction relative to the actuating fork (2, 22, 27, 33, 34, 35),
- **characterized in that** the prongs (6, 7, 24, 25, 36, 38) of the actuating fork (2, 22, 27, 33, 34, 35) are pivotable relative to the device (3) about a pivot axis (26) aligned perpendicular to the axial direction.

2. Shift device according to Claim 1, in which the actuating fork (27) is supported on the device by means of a journal (29).

3. Shift device according to Claim 2, in which the actuating fork (27) is pivotably mounted on the journal (29).

4. Shift device according to Claim 2, in which the journal (29) is pivotably mounted on the device (3).

5. Shift device according to Claim 1, 2, 3 or 4, in which the actuating fork (34) is pivotably mounted by means of at least one antifriction bearing (37).

6. Shift device according to Claim 1, in which the imaginary elongation of the pivot axis (26) intersects the axis of rotation (4) at right angles.

7. Shift device according to Claim 1, in which the main directional axes of the prongs (41) run so as to be aligned parallel to one another and are pivotable about the pivot axis (26) on an imaginary common circular path (44).

8. Shift device according to Claim 1 or 7, in which, at least where the guide rail (5) runs between the prongs (36), the prongs (36) are of roof-shaped design with two roof surfaces (36a) which converge on one another, wherein
- the roof surfaces (36a) run obliquely with respect to one another, and here, in each case one roof surface (36a) on one of the prongs (36) faces obliquely towards a roof surface (36a) on the other prong (36),
- the roof surfaces (36a) converge on one another at a rounded apex edge (36b),
- the respective apex edge (36b) of the respective prong (36) is situated opposite the apex edge (36b) of the opposite prong (36).

9. Shift device according to Claim 1, in which on the respective prong (38) of the actuating fork (35) there is rotatably mounted in each case one roller (39), which rollers between them receive the guide rail (5), the axis of rotation of the roller (39) corresponding to the main axis (41) of the prong (38) and running so as to be aligned parallel to the pivot axis (26).

10. Shift device according to Claim 1, in which the adjustment guide (1) is an actuating disc (20) on which at least one radially outer edge forms the guide rail (5).

11. Shift device according to Claim 1, having a shift drum (18), the adjustment guide (1) being the shift drum (18) with at least one basic body (19) and with at least one guide rail (5) which projects radially beyond the basic body (19) at the circumference.

## Revendications

1. Dispositif de commutation comprenant au moins un guide de réglage (1), au moins une fourche de commande (2, 22, 27, 33, 34, 35) et au moins un système (3) pour la transmission de mouvements de réglage, le guide de réglage (1) étant disposé de manière à pouvoir au moins pivoter autour d'un axe de rotation (4) orienté axialement et présentant au moins un rail de guidage (5) s'étendant dans la direction périphérique autour de l'axe de rotation (4), et le guide de réglage (1) étant en liaison fonctionnelle au moyen du rail de guidage (5) par le biais de la fourche de commande (2, 22, 27, 33, 34, 35) avec le système (3) pour la transmission de mouvements de réglage,
- l'allure du rail de guidage (5) s'écartant axialement au moins une fois d'un plan radial et montant en l'occurrence au moins dans une direction axiale au-dessus du plan radial,
- la fourche de commande (2, 22, 27, 33, 34, 35) étant déplaçable axialement parallèlement à l'axe de rotation (4) et venant en prise pardessus le rail de guidage (5) avec au moins deux dents (6, 7, 24, 25, 36, 38),
- la fourche de commande (2, 22, 27, 33, 34, 35) étant connectée au système (3),
- le rail de guidage (5) étant disposé dans la direction périphérique par rapport à la fourche de commande (2, 22, 27, 33, 34, 35) de manière déplaçable entre les dents (6, 7, 24, 25, 36, 38),
**caractérisé en ce que**
- les dents (6, 7, 24, 25, 36, 38) de la fourche de commande (2, 22, 27, 33, 34, 35) sont déplaçables par rapport au système (3) par pivotement autour d'un axe de pivotement (26) orienté transversalement à la direction axiale.

2. Dispositif de commutation selon la revendication 1, dans lequel la fourche de commande (27) est supportée sur le système au moyen d'un boulon (29).

3. Dispositif de commutation selon la revendication 2, dans lequel la fourche de commande (27) est montée de manière mobile en pivotement sur le boulon (29).

4. Dispositif de commutation selon la revendication 2, dans lequel le boulon (29) est monté de manière mobile en pivotement sur le système (3).

5. Dispositif de commutation selon la revendication 1, 2, 3 ou 4, dans lequel la fourche de commande (34) est supportée de manière mobile en pivotement à l'aide d'au moins un palier à roulement (37).

6. Dispositif de commutation selon la revendication 1, dans lequel le prolongement imaginaire de l'axe de pivotement (26) coupe l'axe de rotation (4) à angle droit.

7. Dispositif de commutation selon la revendication 1, dans lequel les axes de directions principales des dents (41) s'étendent parallèlement les uns aux autres et sont déplaçables en pivotement autour de l'axe de pivotement (26) sur une trajectoire circulaire commune imaginaire (44).

8. Dispositif de commutation selon la revendication 1 ou 7, dans lequel les dents (36) sont réalisées en forme de toit avec deux surfaces de toit (36a) s'étendant l'une vers l'autre au moins là où le rail de guidage (5) s'étend entre les dents (36),
- les surfaces de toit (36a) s'étendant de manière inclinée l'une vers l'autre et en l'occurrence, une surface de toit respective (36a) au niveau de l'une des dents (36) étant tournée de manière oblique vers une surface de toit (36a) au niveau de l'autre dent (36),
- les surfaces de toit (36a) se rejoignant au niveau d'un faîte (36b) arrondi,
- le faîte respectif (36b) de la dent respective (36) étant opposé au faîte (36b) de la dent opposée (36).

9. Dispositif de commutation selon la revendication 1, dans lequel un rouleau (39) est à chaque fois monté à rotation sur la dent respective (38) de la fourche de commande (35), les rouleaux recevant entre eux le rail de guidage (5), l'axe de rotation du rouleau (39) correspondant à l'axe principal (41) des dents (38) et s'étendant parallèlement à l'axe de pivotement (26).

10. Dispositif de commutation selon la revendication 1, dans lequel le guide de réglage (1) est un disque de commande (20) dans lequel au moins un bord radialement extérieur forme le rail de guidage (5).

11. Dispositif de commutation selon la revendication 1, comprenant un cylindre de commutation (18), le guide de réglage (1) étant le cylindre de commutation (18) avec au moins un corps de base (19) et avec au moins un rail de guidage (5) dépassant radialement le corps de base (19) du côté périphérique.
